# EUROPEAN PATENT APPLICATION

(11) **EP 3 404 575 A1**
(43) Date of publication of application: **21.11.2018**
(21) Application number: 18172106.9
(22) Date of filing: 14.05.2018
(51) Int. Cl.: G06F 21/84

(54) **SERVICE TOOL WITH SURVEILLANCE CAMERA DETECTION**

(30) Priority: 15.05.2017 US 201715595477
(71) Applicant: Otis Elevator Company, Farmington, Connecticut 06032 (US)
(72) Inventor: FINN, Alan Matthew, East Hartford, Connecticut 06108 (US); HSU, Arthur, Farmington, Connecticut 06032 (US)
(74) Representative: Schmitt-Nilson Schraud Waibel Wohlfrom Patentanwälte Partnerschaft mbB

(57) **Abstract**

A method of operating a secure input/output system or a mobile device is provided. This method is particularly advantageous when the secure input/output system or the mobile device is a technician's service tool. The method includes determining whether an eavesdropping attack of the secure input/output system or the mobile device is underway and outputting information through a display device of the secure input/output system or the mobile device only upon determining that there is no eavesdropping attack currently underway.

## Description

The following description relates to secure input/output systems or mobile devices and, more particularly, to a secure input/output system or a mobile device, such as a service tool, with surveillance camera detection capability.

The need for user authentication is present in many fields and applications and can be satisfied by proof of one or more of what you know (e.g., a password, etc.), what you have (e.g., a token, etc.) and/or what you are (e.g., biometrics). In the latter category, facial recognition systems can be used and may be inexpensive, convenient and sufficiently accurate for many applications including those requiring continuous authentication. Facial recognition, in particular, involves a camera being aimed outwardly from a display screen with an authorized user or another user positioned within the camera's field of view (FoV). The camera then images the faces seen in the FoV and software is executed to perform facial recognition algorithms on those images.

While such facial recognition can be useful, problems exist. These include eavesdropping attacks in which information displayed to an authorized user is surveilled by an unauthorized user. Such surveillance can be accomplished by the unauthorized user looking over the shoulder of the authorized user either surreptitiously or in collusion with the authorized user or by the unauthorized user pointing a camera or other image generating device at the displayed information and thereby viewing it or imaging and saving it for later use.

For the cases in which a camera or other image capture device is used to eavesdrop on information that is otherwise displayed to an authorized user, certain methods of camera detection are available. One involves the detection of glint from the optical elements of the camera and another involves the detection of electromagnetic radiation emitted from the camera. Of these, while glint-based detectors can be provided as applications for existing cameras such as on mobile phones, the detection of electromagnetic radiation often requires significant customized hardware. In any case, both methods exhibit relatively high false alarm rates and require human interpretation.

According to one aspect of the disclosure, a method of operating a secure input-output system or a mobile device is provided. The method includes determining whether an eavesdropping attack of the secure input-output system or the mobile device is underway and outputting information through a display device of the secure input-output system or the mobile device only upon determining that there is no eavesdropping attack currently underway.

Particular embodiments may include any of the following optional features, alone or in combination:
In accordance with additional or alternative embodiments, the determining includes performing glint detection to identify glint generating elements and verifying that identified glint generating elements are cameras.

In accordance with additional or alternative embodiments, the performing of glint detection includes activating an illuminator to emit an electromagnetic (EM) signal with modulation, receiving reflected EM signals at an imaging device, the reflected EM signals comprising first EM signals exhibiting characteristics associated with the modulation and second EM signals exhibiting characteristics of extraneous EM radiation and filtering the first EM signals from the second EM signals at a processor to reject sources of the second EM signals and to identify sources of the first EM signals as the glint generating elements.

In accordance with additional or alternative embodiments, the illuminator includes one or more of a visible spectrum, an infrared (IR) and a near-IR (NIR) light emitting diode (LED).

In accordance with additional or alternative embodiments, the modulation is at a frequency which is detectable by the imaging device.

In accordance with additional or alternative embodiments, the method further includes rejecting sources of the first EM signals which are non-spatially stationary or rejecting sources of the first EM signals which exhibit evidence of being human eyes.

In accordance with additional or alternative embodiments, the verifying that identified glint generating elements are cameras includes deep learning from available data.

In accordance with additional or alternative embodiments, the verifying that identified glint generating elements are cameras includes joint estimation.

In accordance with additional or alternative embodiments, the joint estimation includes at least one of Bayesian estimation, maximum likelihood (ML) estimation, maximum a priori (MAP) estimation and non-linear least squares (NNLS).

In accordance with additional or alternative embodiments, the secure input/output system or the mobile device is a service tool.

According to another aspect of the disclosure, a secure input/output system or a mobile device is provided. The secure input/output system or the mobile device includes an output device disposed to display information to a user, an illuminator configured to emit an electromagnetic (EM) signal with modulation, an imaging device which is receptive of reflected EM signals and a processor. The reflected EM signals received by the imaging device include first EM signals exhibiting characteristics associated with the modulation and second EM signals exhibiting characteristics of extraneous EM radiation. The processor filters the first EM signals from the second EM signals, identifies sources of the first EM signals as glint generating elements, verifies that identified glint generating elements are cameras and controls operations of the output device based thereon.

Particular embodiments may include any of the following optional features, alone or in combination:
In accordance with additional or alternative embodiments, the secure input/output system or the mobile device further includes user input devices and a hand-held housing on which the output device, the illuminator, the imaging device and the user input devices are supportively disposed.

In accordance with additional or alternative embodiments, the information displayed by the output device includes proprietary information.

In accordance with additional or alternative embodiments, the illuminator one or more of a visible spectrum, an infrared (IR) and a near-IR (NIR) light emitting diode (LED).

In accordance with additional or alternative embodiments, the modulation is at a frequency which is detectable by the imaging device.

In accordance with additional or alternative embodiments, the processor rejects sources of the first EM signals which are non-spatially stationary or the processor rejects sources of the first EM signals which exhibit evidence of being human eyes.

In accordance with additional or alternative embodiments, the processor verifies that identified glint generating elements are cameras by at least one of deep learning from available data and joint estimation.

In accordance with additional or alternative embodiments, the joint estimation includes at least one of Bayesian estimation, maximum likelihood (ML) estimation, maximum a priori (MAP) estimation and non-linear least squares (NNLS).

According to yet another aspect of the disclosure, a method of operating a secure input/output system or a mobile device is provided. The method includes emitting an electromagnetic (EM) signal with modulation, receiving reflected EM signals comprising first EM signals exhibiting characteristics associated with the modulation and second EM signals exhibiting characteristics of extraneous EM radiation, filtering the first EM signals from the second EM signals to reject sources of the second EM signals and to identify sources of the first EM signals as glint generating elements, verifying that identified glint generating elements are cameras and controlling operations of the output device based on a verification result.

Particular embodiments may include any of the following optional features, alone or in combination:
In accordance with additional or alternative embodiments, the method further includes rejecting sources of the first EM signals which are non-spatially stationary or rejecting sources of the first EM signals which exhibit evidence of being human eyes.

In accordance with additional or alternative embodiments, the verifying that identified glint generating elements are cameras includes deep learning from available data and joint estimation.

These and other advantages and features will become more apparent from the following description taken in conjunction with the drawings.

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a secure input/output system or a mobile device in accordance with embodiments;
FIG. 2 is a view of operations of an illuminator and an imaging device of the secure input/output system or the mobile device of FIG. 1;
FIG. 3 is a schematic diagram illustrating a processing system of the secure input/output system or the mobile device of FIG. 1; and
FIG. 4 is a flow diagram illustrating a method of operating a secure input/output system or a mobile device in accordance with embodiments.

Secure input/output systems or mobile devices, and particularly, service tools such as those carried by repairmen, often include proprietary information and intellectual property that needs to be displayed and yet remain protected from inadvertent disclosure or protected from purposeful attempts to gain unauthorized access. This is especially true in the particular case of service tools of elevator repairmen who might board an elevator and use their service tool in the presence of elevator passengers, who might use their service tool in the presence of building supervisors or other repairmen, or who might lose the tool accidentally or due to theft.

Thus, as will be described below, a method and a secure input/output system or mobile device are provided by which an eavesdropping attack of the secure input/output system or the mobile device in the form of a camera being used to take pictures of displayed information is defended against. To this end, the method and the secure input/output system or the mobile device combine object detection by video analytics (the object, in this case, being a camera or another similar device) with glint detection in the visible spectrum or in the near-infrared (NIR) spectrum where the NIR frequency is still within a sensitive range of the secure input/output system's or the mobile device's camera. On detection of a camera attempting to image information displayed by the secure input/output system or the mobile device, at least the display capability of the secure input/output system or the mobile device may be disabled until specifically reset.

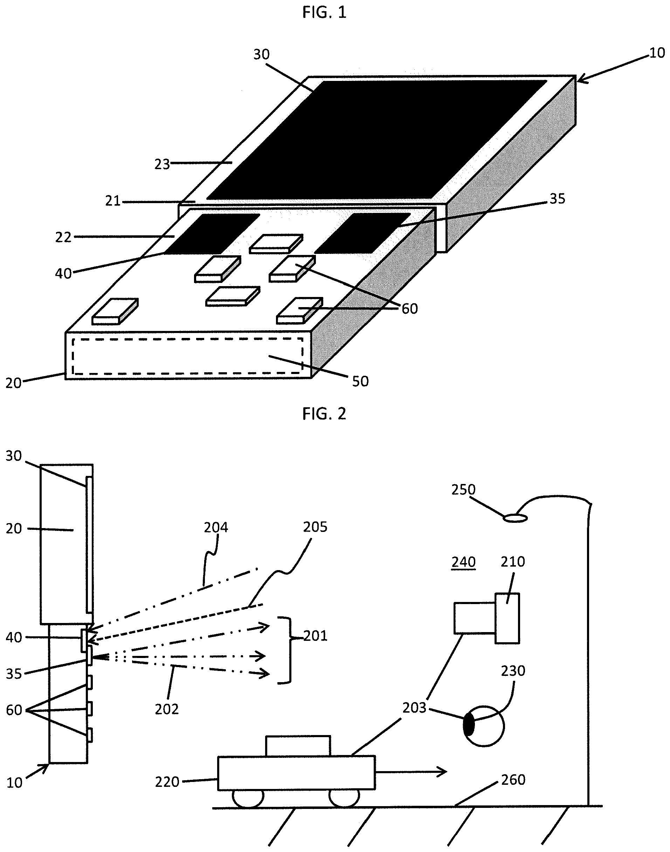

With reference to FIG. 1, a secure input/output system or a mobile device (hereinafter referred to as a "mobile device") 10 is provided. The mobile device 10 may be any tool that can be interacted with by an authorized person or, in a particular case, a hand-held device and may be provided as a portable computing device, a laptop, a tablet, a smartphone or a dedicated tool, such as a service tool. Thus, for the purposes of clarity and brevity, the following description will relate to the particular case of the mobile device 10 being provided either as a smartphone or as a hand-held service tool.

In the particular case of the mobile device 10 being a hand-held device, the mobile device 10 may include a housing 20, an output device 30 which is supportively disposed on the housing 20, an illuminator 35 which is supportively disposed on the housing 20, an imaging device 40 which is also supportively disposed on the housing 20 and a processor 50 that can be provided within the housing 20 or remote from the housing 20. The mobile device 10 may also include a power source (not shown), such as a battery or, more particularly, a rechargeable battery.

As shown in FIG. 1, the housing 20 can be formed of rigid or semi-rigid materials and can be sized to be hand held with a front face 21 having a user input section 22 and an output section 23. The output device 30 may be provided in the output section 23 as a screen, such as an LCD screen or some other suitable type of display screen, which can be configured and controllably operated to display information and, in particular, proprietary information to a user who is verified to be authorized to view such information and proprietary information. The mobile device 10 may also include user input devices 60, such as control and arrow buttons, a real, graphical or virtualized keyboard, a touchpad, etc., for controlling various operations of the mobile device 10 in the user input section 22.

The illuminator 35 may be provided as a visible spectrum, an infrared (IR), or near-IR (NIR) light emitting diode and may be supportively disposed on the housing 20 as a single illuminator 35 or as multiple illuminators 35 that is or are at least partially operable by the processor 50. The illuminator 35 may be configured to emit an electromagnetic (EM) radiation signal (hereinafter referred to as an "EM signal") with modulation at a frequency that is detectable by the imaging device 40. The imaging device 40 may be provided as a single camera or as multiple cameras that is or are at least partially operable by the processor 50.

With reference to FIG. 2, the illuminator 35 is configured to emit the EM signal 201 with the modulation 202 outwardly so that the EM signal 201 reflects off of one or more glint generating elements 203 and thus returns to the imaging device 40 along with other extraneous or reflected EM signals. The imaging device 40 is configured to take and generate analog or digital images or video and has a FoV that is large enough and angled appropriately to receive the reflected EM signals from multiple sources in the FoV. The reflected EM signals thus include first EM signals 204 and second EM signals 205. The first EM signals 204 exhibit characteristics that are associated with the original modulation 202 and may be reflected from various sources including, but not limited to, the optical elements of cameras or other image generating devices 210 as well as non-optical elements such as relatively non-spatially stationary sources 220 (which could not be cameras due to their relative non-stationary nature and the fact that cameras of the type that would be used for eavesdropping attacks are constrained against substantial movements) and features of human eyes 230. The second EM signals 205 exhibiting characteristics of extraneous EM radiation and may be ambient light 240, an EM signal produced by artificial light source 250, such as a streetlight, or glare off of a dark surface 260.

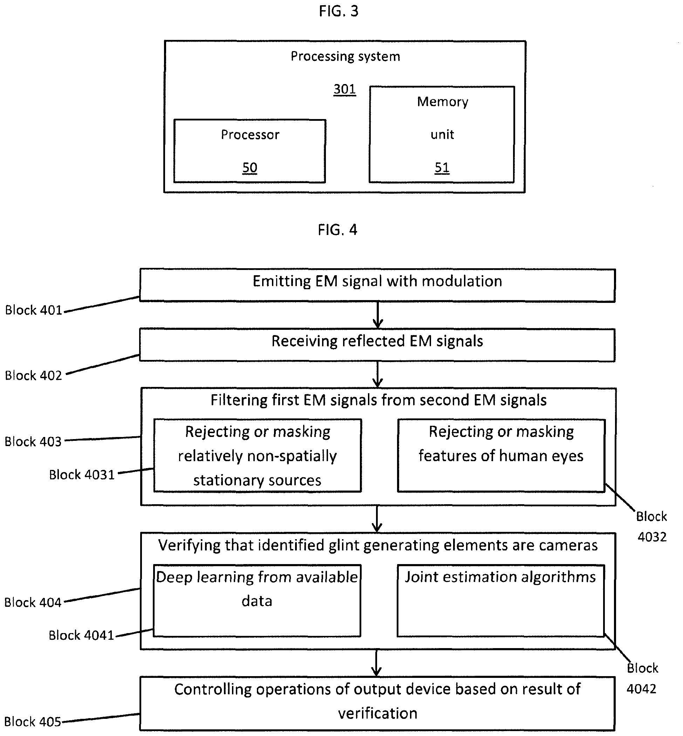

With reference back to FIG. 1 and with additional reference to FIGS. 3 and 4, the processor 50 may be provided within a processing system 301 along with a memory unit 51. The memory unit 51 may have executable instructions stored thereon, which, when executed, cause the processor 50 to operate as described herein. For example, the executable instructions may instruct the processor 50 to cause the illuminator 35 to emit the EM signal 201 with the modulation 202 (see block 401 in FIG. 4) and to activate the imaging device 40 to receive the reflected EM signals including the first EM signals 204 exhibiting the characteristics associated with the modulation and the second EM signals 205 exhibiting the characteristics of extraneous EM radiation (see block 402 in FIG. 4). In addition, the executable instructions may instruct the processor 50 to filter the first EM signals 204 from the second EM signals 205 to thereby be able to reject the sources of the second EM signals 205 and to thereby be able to identify sources of the first EM signals 204 as potentially being glint generating elements, such as cameras (see block 403 in FIG. 4), to verify that identified glint generating elements are indeed cameras (see block 404 in FIG. 4) and to control operations of the output device 30 based on a result of the verification (see block 405 of FIG. 4). In particular, in an event that the identified glint generating objects are verified to indeed be cameras, the processor 50 at least prevents the output device 30 from displaying proprietary information until the cameras are removed from the FoV of the imaging device 40 and a restart or reset can be completed.

The filtering of the first EM signals 204 from the second EM signals 205 may be executed by the processor 50 determining that the first EM signals 204 exhibit the characteristics that are associated with the original modulation 202. That is, the first EM signals 204 may be reflected off of the one or more glint generating elements 203 with a same or a remnant of the modulation 202. In either case, the imaging device 40 is capable of detecting the modulation 202 or the remnant thereof which is present in the first EM signals 204 by performing, for example, matched filtering on the modulation sequence whereby the processor 50 can interpret the sources of the first EM signals 204 as being from the one or more glint generating elements 203.

In accordance with embodiments, the identification of sources of the first EM signals 204 as potentially being glint generating elements, such as cameras of block 403 in FIG. 4 may include an execution of an object recognition algorithm, which is configured or tuned to recognize cameras and other optical elements in optical imagery, and a rejection or masking of those sources of the first EM signals 204 that are not identifiable as cameras as a result of the object recognition algorithm execution. Such rejections or masking may be accomplished by the imaging device 40 or the processor 50 and may include rejecting or masking the relatively non-spatially stationary sources 220 (see block 4031 of FIG. 4) and the features of human eyes 230 (see block 4032 of FIG. 4). In the rejections or masking of the relatively non-spatially stationary sources 220 and the features of human eyes 230, it is to be understood that the service tool 10 itself may be hand-held and moving at least slightly. As such, the rejections or masking of the relatively non-spatially stationary sources 220 in particular take into account the slight movements of the service tool 10 by tracking techniques or by registering successive frames and looking for spatially stationary glint, for example, and the nature of relative movements of the service tool 10 and the relatively non-stationary sources 220 can be understood and the degree and direction of the relative movements attributed only to the service tool 10.

In accordance with further embodiments, the verification that identified glint generating elements are indeed cameras of block 404 in FIG. 4 may include at least one of deep learning from available data (see block 4041 of FIG. 4), such as the library of information available in google images, and joint estimation algorithms (see block 4042 of FIG. 4). The deep learning training may use only partially labeled data, or may be initially or partially trained on unlabeled data with only a final training on labeled data, or may be trained on data that is only implicitly labeled, or may be trained on fully labeled data. The joint estimation algorithms may include, for example, at least one of Bayesian estimation, maximum likelihood (ML) estimation, maximum a priori (MAP) estimation and non-linear least squares (NNLS).

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A method of operating a secure input/output system or a mobile device, the method comprising:
determining whether an eavesdropping attack of the secure input/output system or the mobile device is underway; and
outputting information through a display device of the secure input/output system or the mobile device only upon determining that there is no eavesdropping attack currently underway.

2. The method according to claim 1, wherein the determining comprises:
performing glint detection to identify glint generating elements; and
verifying that identified glint generating elements are cameras.

3. The method according to claim 2, wherein the performing of glint detection comprises:
activating an illuminator to emit an electromagnetic (EM) signal with modulation;
receiving reflected EM signals at an imaging device, the reflected EM signals comprising first EM signals exhibiting characteristics associated with the modulation and second EM signals exhibiting characteristics of extraneous EM radiation; and
filtering the first EM signals from the second EM signals at a processor to reject sources of the second EM signals and to identify sources of the first EM signals as the glint generating elements.

4. The method according to claim 3, wherein the illuminator comprises one or more of a visible spectrum, an infrared (IR) and a near-IR (NIR) light emitting diode (LED); and/or wherein the modulation is at a frequency which is detectable by the imaging device.

5. The method according to claim 3 or 4, further comprising:
rejecting sources of the first EM signals which are non-spatially stationary; or
rejecting sources of the first EM signals which exhibit evidence of being human eyes.

6. The method according to any of claims 2 to 5, wherein the verifying that identified glint generating elements are cameras comprises deep learning from available data.

7. The method according to any of claims 2 to 6, wherein the verifying that identified glint generating elements are cameras comprises joint estimation.

8. The method according to claim 7, wherein the joint estimation comprises at least one of Bayesian estimation, maximum likelihood (ML) estimation, maximum a priori (MAP) estimation and non-linear least squares (NNLS).

9. The method according to any of claims 1 to 8, wherein the secure input/output system or the mobile device comprises a service tool.

10. A secure input/output system or a mobile device, comprising:
an output device disposed to display information to a user;
an illuminator configured to emit an electromagnetic (EM) signal with modulation;
an imaging device which is receptive of reflected EM signals,
the reflected EM signals comprising first EM signals exhibiting characteristics associated with the modulation and second EM signals exhibiting characteristics of extraneous EM radiation; and
a processor which filters the first EM signals from the second EM signals, identifies sources of the first EM signals as glint generating elements, verifies that identified glint generating elements are cameras and controls operations of the output device based thereon.

11. The secure input/output system or the mobile device according to claim 10, further comprising:
user input devices; and
a hand-held housing on which the output device, the illuminator, the imaging device and the user input devices are supportively disposed.

12. The secure input/output system or the mobile device according to claim 10 or 11, wherein the illuminator comprises one or more of a visible spectrum, an infrared (IR) and a near-IR (NIR) light emitting diode (LED); and/or wherein the modulation is at a frequency which is detectable by the imaging device.

13. The secure input/output system or the mobile device according to any of claims 10 to 12, wherein:
the processor rejects sources of the first EM signals which are non-spatially stationary, or the processor rejects sources of the first EM signals which exhibit evidence of being human eyes; and/or wherein the processor verifies that identified glint generating elements are cameras by at least one of deep learning from available data and joint estimation, wherein particularly the joint estimation comprises at least one of Bayesian estimation, maximum likelihood (ML) estimation, maximum a priori (MAP) estimation and non-linear least squares (NNLS).

14. A method of operating a secure input/output system or a mobile device, the method comprising:
emitting an electromagnetic (EM) signal with modulation;
receiving reflected EM signals comprising first EM signals exhibiting characteristics associated with the modulation and second EM signals exhibiting characteristics of extraneous EM radiation;
filtering the first EM signals from the second EM signals to reject sources of the second EM signals and to identify sources of the first EM signals as glint generating elements;
verifying that identified glint generating elements are cameras; and
controlling operations of the output device based on a verification result.

15. The method according to claim 14, further comprising:
rejecting sources of the first EM signals which are non-spatially stationary; or
rejecting sources of the first EM signals which exhibit evidence of being human eyes;
wherein the verifying that identified glint generating elements are cameras particularly comprises deep learning from available data and joint estimation.
